# EUROPEAN PATENT APPLICATION

(11) **EP 2 519 038 A1**
(43) Date of publication of application: **31.10.2012**
(21) Application number: 10791224.8
(22) Date of filing: 13.04.2010
(51) Int. Cl.: H04W 4/12

(54) **SERVICE REMINDING METHOD, SERVICE REMINDING SYSTEM AND COMMUNICATION SYSTEM**

(30) Priority: 22.12.2009 CN 200910254390
(71) Applicant: ZTE Corporation, Shenzhen, Guangdong 518057 (CN)
(72) Inventor: ZHOU, Shijun, Shenzhen Guangdong 518057 (CN)
(74) Representative: Anderson, Angela Mary
(86) International application number: PCT/CN2010/071740
(87) International publication number: WO 2010/148718

(57) **Abstract**

The present invention discloses a service reminding method, a service reminding system and a communication system. The service reminding system includes a schedule inputting module (202), a schedule processing module (203) and a database module (205), wherein the schedule inputting module (202) is used to input reminding schedule information including user information, service information and a first reminding time into the database module (205). The schedule processing module (203) is used to extract the reminding schedule information from the database module (205), detect whether a service server sends a particular service to a corresponding user or not within the first reminding time, and send reminding information to the corresponding user if it is detected that the particular service is not sent to the corresponding user. With the present invention, the user can be reminded effectively and the user satisfaction can be improved. The present invention also discloses a method for registering a service reminder which is used to check the validity of subscription information of a user and prevent the user from blindly making a reminding schedule.

## Description

### Technical Field

The present invention relates to the field of communications, and more especially, to a service reminding method, a service reminding system and a communication system.

### Background of the Related Art

Multimedia Messaging Service (MMS) is a kind of messaging service that can transport multimedia contents between mobile phones, between a service provider and a mobile phone as well as between a mobile phone and another application such as an email server. The Multimedia Messaging Service is divided in accordance with the operator to which the user belongs and the area in which the Multimedia Messaging Service is located, and the Multimedia Messaging Service Center (MMSC) to which the user belongs provides the MMS to the user.

The Service provider (SP) refers to the direct provider of the mobile Internet application services, and the SP is responsible for developing and providing services used by the mobile phone users according to the user requirements. Usually, the SP has telecom operator access channels to provide the users with services, and the SP is a service provider having telecommunications access resources.

"Mobile Newspaper" is a private service provided by the China Mobile cooperating with domestic mainstream media enterprises, and it provide users with timely information services (including news, sports, entertainment, culture, life and other contents) through the MMS, the WAP, and so on, that is to say, it is a SP. The China Mobile has made a large marketing effort on this service, and the China Mobile itself possesses very rich user resources, therefore, the volume of this service is enormous, nowadays, the service reaches about 70% of the entire MMS traffic. There are more and more users subscribing this service, thus it changes the consuming habits of many users, from originally purchasing the newspaper to watching the mobile newspaper, and the mobile newspaper has the advantages of convenient, money saving, and environmental protection. No matter from a view of the user or from a vire of the operator, the mobile newspaper has become a key service.

The Data Service Management Platform (DSMP) is the management core platform of data services and implements functions of service management and control of the data service. The data service management platform is mainly responsible for user management, service management, and SP management, and provides an open interface to the outside and provides the billing functions to each service gateway and the SP. The platform should also provide a variety of statistic and query functions of the data service, such as user statistics, SP and service statistics, charge statistics.

Due to the rapid development of mobile newspaper service, although the device (such as the MMSC) bearing the service continues to expand, the pressure of the system processing the load is still very large, resulting in that frequently the user receives the mobile newspaper with a time delay, the user will complain if such subscribed news are not received within a certain time period.

### Summary of the Invention

The purpose of the present invention is to provide a service reminding method, a service reminding system, a communication system and a method for registering a service reminder to effectively remind a user and to enhance customer satisfaction.

The present invention provides a service reminding method, comprising:
detecting whether a service server sends a particular service to a user corresponding to the particular service within the first reminding time or not, if the service server does not send the service, sending reminding information to the user.

The step of sending the reminding information to the user might comprise:
judging whether the current time exceeds a second reminding time or not, if it does not exceed the second reminding time, sending the first reminding information to the user
the step of sending the reminding information to the user might also comprise:
   if it is determined that the current time exceeds the second reminding time, judging whether the sending of the particular service stops or not, if it does not stop, sending the first reminding information to the user; if the sending of the particular service has stopped, sending the second reminding information to said user.

The aforementioned method might also have the following feature: in the step of sending the reminding information to said user, the reminding information is sent once to the user corresponding to the particular service every predetermined time interval.

The present invention also provides a service reminding system, comprising: a schedule inputting module, a schedule processing module and a database module, wherein,
the schedule inputting module is set to input the reminding schedule information into the database module, and the reminding schedule information comprises user information, service information and the first reminding time;
the schedule processing module is set to extract the reminding schedule information from the database module, detect whether the service server sends a particular service to the user corresponding to the particular service within the first reminding time or not, if not, sending the reminding information to the user.

The aforementioned service reminding system might also have the following feature:
the schedule inputting module is set to input the reminding schedule information into the database module after sending the user information and the service information to a authentication server and receiving the authentication success message returned by the authentication server.

The aforementioned service reminding system might have the following feature: the reminding schedule information also comprises the second reminding time,
the schedule processing module is set to send the reminding information to said user as follows: after detecting that the service server does not send the particular service to the user corresponding to the particular service, judging whether the current time exceeds the second reminding time or not, if not, sending the first reminding information to the user.

The aforementioned service reminding system might have the following feature:
the schedule processing module is also set to send the reminding information to said user as follows: if it is determined that the current time exceeds the second reminding time, judging whether the sending of the particular service stops or not, if it does not stop, sending the first reminding information to the user; if the sending of the particular service has stopped, sending the second reminding information to said user.

The aforementioned service reminding system might have the following feature: the reminding schedule information also comprises a time interval,
the schedule processing module is set to send the reminding information once to said user every time interval.

The aforementioned service reminding system might also comprise:
a log module, which is set to record the information that the service server does not send the particular service to the user corresponding to that particular service.

The present invention also provides a communication system, comprising: a service server and the service reminding system as described above,
the service reminding system is connected with the service server through an interface and is set to: detect whether the service server sends the particular service to the user corresponding to the particular service within the first reminding time or not, if the service server does not send the particular service, send reminding information to the user.

The aforementioned communication system might also comprise an authentication server,
the service reminding system is also set to: receive the reminding schedule information submitted by the user, send the user information and the service information in the received reminding schedule information to the authentication server, when authentication success message returned by the authentication server is received, input the reminding schedule information into the database module in the service reminding system;
the authentication server is set to authenticate the received user information and service information, if the authentication is successful, send the authentication success message to the service reminding system.

The aforementioned communication system might have the following feature:
the service reminding system is set to send the reminding information to said user as follows: after detecting that the service server does not send the particular service to the user corresponding to the particular service, judging whether the current time exceeds the second reminding time or not, if it does not exceed, sending the first reminding information to the user.

The aforementioned communication system might have the following feature:
the service reminding system is also set to send the reminding information to the user as follows: if it is determined that the current time exceeds the second reminding time, judging whether the sending of the particular service stops or not, if it does not stop, sending the first reminding information to the user; if the sending of the particular service has stopped, sending the second reminding information to said user.

The aforementioned communication system might have the following feature:
the service reminding system is set to send the reminding information once to said user every predetermined time interval.

The aforementioned communication system might also comprise: a charge management system,
the service reminding system is set to record the information that the service server does not send the particular service to the user corresponding to the particular service, and then send the user information to said charge management system;
the charge management system is set to calculate the user's charge based on the received user information.

The aforementioned communication system might have the following feature:
the service server is also set to send a piece of notification message to the service reminding system when the particular service is sent to the user corresponding to the particular service;
the service reminding system is also set to delete the user's reminding schedule information corresponding to the notification message after receiving the notification message.

The present invention also provides a method for registering a service reminder, comprising:
after receiving reminding schedule information submitted by a user, extracting the user information and particular service information; and
authenticating the user information and the particular service information, if the authentication is successful, recording the reminding schedule information.

In summary, the present invention provides a service reminding method, a service reminding system and a communications system to effectively remind the user and enhance the customer satisfaction. The method for registering a service reminder provided in the present invention can be used to check the validity of the user's subscription information and to prevent the user from blindly making a reminding schedule.

### Brief Description of Drawings

FIG. 1 is a schematic diagram of a communication system in accordance with an embodiment of the present invention;
FIG. 2 is a schematic diagram of a service reminding system in accordance with an embodiment of the present invention;
FIG. 3 is a flow chart of a service reminding method in accordance with an embodiment of the present invention;
FIG. 4 is a flow chart of a method for registering a service reminder in accordance with an embodiment of the present invention.

### Preferred Embodiments of the Present Invention

In the following, the specific embodiments of the present invention will be described in further detail in combination with the accompanying figures.

The service reminding system provided in the present invention mainly can complete the following functions: in the case that the service server (such as the MMS center) does not send a certain particular service within a certain time period in the same day, sending reminding information to the user at a time interval, for example, sending a PUSH SMS to remind, in the case that the reminding time range is not exceeded or the service is still sent via the MMS Center, reminding the user to wait patiently; in the case that the reminding time range is exceeded and the service has not been sent via the MMS Center for a time period, remind the user for the last time to inform the user of the information such as: "Today's MMS can not be sent successfully due to system reasons, and the system will correspondingly reduce your charge later.", meanwhile, it records the information that the user does not receive this service, and generates and uniformly sends a document to the charge management system, for example, the business operation support systems (BOSS) processes the account and performs operations such as reducing the user's charge of that month.

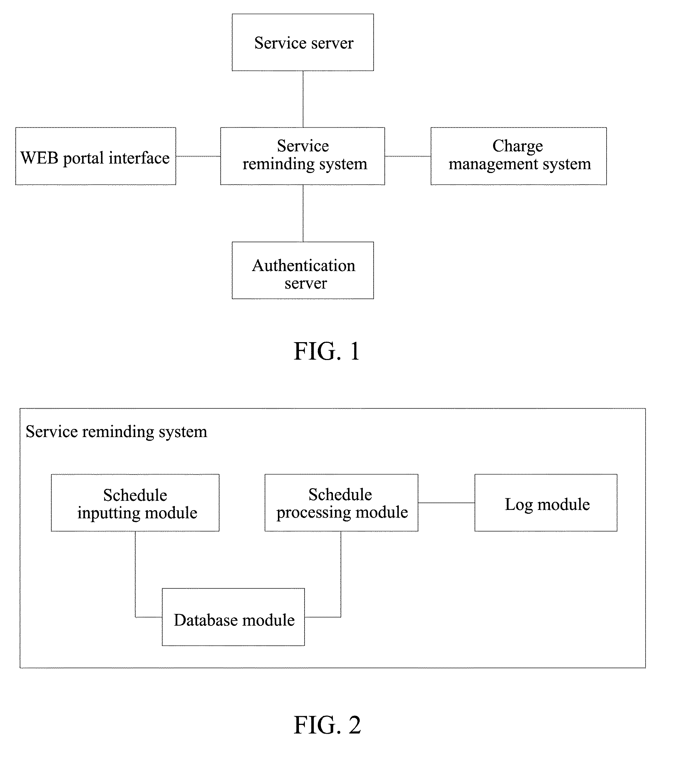

FIG. 1 is a schematic diagram of the communication system in accordance with an embodiment of the present invention, as shown in FIG. 1, the communication system of the present embodiment comprises: a service reminding system and a service server (such as the MMS Center).

The service reminding system is connected with the service server through the service interface (such as the MMS center interface), and the service reminding system is set to detect whether the service server sends the particular service to the user corresponding to the particular service or not during the first reminding time, if it is detected that the service server does not send the particular service, send reminding information to the user.

The service interface can achieve the following two functions:
one is, the information that the service server (such as the MMS center) sends the particular service to the user should be submitted to the service reminding system;
therefore, in the particular service (such as the MMS) operation process, the service sending condition of each SP in a certain time period can be collected by the service reminding system, for example: is there the mobile newspaper service sent to the user within five minutes? As long as there is one service sent, it considers that the mobile newspaper is still being sent, if within five minutes, there is no mobile newspaper service, it considers that the mobile newspaper has stopped being sent. After such information is collected, the multimedia messaging center needs to regularly send the information to the service reminding system for the service reminding system to judge whether the service has stopped being sent or not when the service reminding system reminds the user thereafter, if the service has stopped being sent, a last piece of reminding message is sent, and there will be no reminding message during that day. After the service reminding system receives the information that the particular service is sent to the user, it is to delete the user's reminding schedule related to the service during that day, therefore, the user will not be reminded afterwards.

The other is, the service reminding system sends the PUSH SMS through the MMS center. Currently, the function of the MMS Center sending the PUSH SMS is mature, moreover, the service reminding system is closely linked with the MMS center, and the SMS can be sent through the MMS center.

The service reminding system makes the ordinary users themselves self-register the reminding schedule request through the WEB portal interface, or makes the operator batch input the reminding schedule requests, therefore, the reminding schedule request might be submitted by the user through the WEB page or batch input by the operator extracting the information of the user who complains. The specific reminding schedule information might comprise: the user information (such as the user number), the service information (such as the service code), the reminding starting time, the reminding interval, and so on.

Furthermore, the communication system in this embodiment also comprises an authentication server. Before the service reminding system inputs the reminding schedule information, it sends the user information and service information in the received reminding schedule information to the authentication server, the authentication server authenticates the received user information and service information, if the authentication is successful, it returns the authentication success message to the service reminding system, and then the service reminding system inputs the reminding schedule information after receiving the authentication successful message returned by the authentication server; if the authentication failure message is received from the authentication server, the service reminding system discards the reminding schedule information corresponding to the message.

The authentication server in this embodiment might be a DSMP system, the service reminding system is connected with the DSMP system through the DSMP interface. The DSMP system can be used to authenticate whether the user subscribes a particular service or not, whether the particular service is a monthly service or not, and so on. The service reminding system sends the user number and the service code to the DSMP system to authenticate, the DSMP system mainly judges whether the user subscribes the service or not, as well as whether the service is a monthly service or not, if the authentication is successful, the DSMP system returns the authentication success message to the service reminding system, and the service reminding system writes the reminding schedule information into the database, otherwise, discards the reminding schedule information.

Furthermore, the communication system in this embodiment also comprises a charge management system (such as the BOSS system), the service reminding system is connected with the charge management system through an interface. The service reminding system also records the information that the service server does not send the particular service to the user corresponding to the service, for example, generates an information file, in which the mobile phone number, the service code, the date, and so on are recorded, indicating that the service is not sent to the mobile phone successfully, and then sends the file to the charge management system. The charge management system might use the FTP for example to get the file, process the account based on the file, and perform operations such as reducing the user's charge of that month.

The diagram of the service reminding system in the present embodiment is shown in FIG. 2, the service reminding system in the embodiment comprises a schedule inputting module, a schedule processing module and a database module, wherein:
the schedule inputting module is responsible for inputting the schedule task of each user that needs to be reminded (that is, the reminding schedule information) into the database module, completing the reception of the inputting request, and further sending the reminding schedule information to the DSMP to authenticate, and writing the information into the database module.

The WEB can be used to provide the function of performing specific and batch operation to the user. The inputting requests can be submitted by the users themselves through the WEB page or also can be batch input by the operator extracting the information of the user who complains, the specific reminding schedule information might comprise: the user number, the service code, the reminding starting time, the reminding interval, the reminding ending time, and so on. The schedule inputting module sends the user number and the service code to the DSMP to authenticate, it is mainly to judge whether the user subscribes the service or not, as well as whether the service is a monthly service or not, if the authentication is successful, the schedule inputting module writes the schedule information into the database, otherwise, it discards the information.

The database module mainly stores the reminding schedule information, provides an internal interface for the schedule inputting module and the schedule processing module to maintain and operate the data.

The schedule processing module is mainly responsible for reminding the user on time when the Task Schedule reaches the reminding time; collecting the sending condition of a service in a certain time period; and deleting the reminding schedule accurately without the reminding.

The "reminding starting time" in the reminding schedule information indicates the first time of reminding the user, and then the user is reminded every time interval afterwards, that is, sending reminding information to the user corresponding to the service, such as information of "being sent, please wait", and so on, however, after determining that it is the last reminding, that is, the current time is after the "reminding ending time", no reminder is sent any longer.

In addition, before the "reminding ending time", the schedule processing module also might judge whether the sending of the particular service stops or not, if the sending of that particular service does not stop, sends reminding information such as "being sent, please wait" to the user corresponding to the particular service; if the sending of the particular service has stopped, the reminding information such as "the service is not sent successfully due to the system" is sent to the user.

Furthermore, after said particular service is sent to a certain user in that day, the service server (such as the MMS Center) sends a piece of notification message to the service processing module, and the service processing module deletes the user's reminding schedule of the day after receiving the notification.

Furthermore, the service reminding system in the embodiment also comprises: a log module for recording the information that the service server does not send the particular service to the user corresponding to that particular service, that is, it is responsible for recording the information that the user does not receive the particular service (such as MMS), so that the information can be used by the charge management system (such as the BOSS system) to reduce the user's charge thereafter.

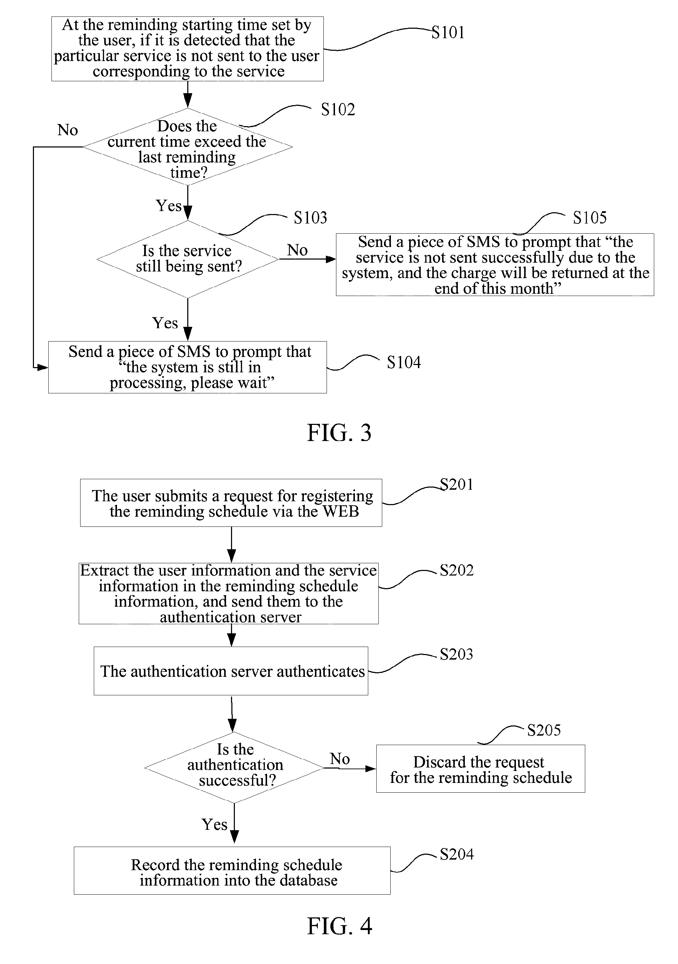

FIG. 3 is a flow chart of the service reminding method in accordance with an embodiment of the present invention, as shown in FIG. 3, the method of the present embodiment comprises the following steps:
In S101, at the reminding starting time set by the user, it is to detect the condition of the service server sending the particular service to the user corresponding to the service, and if it is detected that the particular service is not sent to the user, send reminding information to the user.

For example, the user sets a mobile newspaper reminding schedule which begins from 9 o'clock every morning and reminds every 10 minutes, if at 9 o'clock in that day, the mobile newspaper is not sent to the user, the reminding schedule is processed at this time, for example, the information such as "being processed, please wait!" is sent to the user.

Furthermore, in S 102, it is to judge whether the current time exceeds the last reminding time of the particular service or not;
the last reminding time of the service can be understood as an attribute of the service, or a time at which the reminding system can be configured.

If the last reminding time of the service is not exceeded, it is to proceed to step S104; for example, the current time is 9:00, the last reminding time of the mobile newspaper is 10:00, then the current time does not exceed the last reminding time;
if the last reminding time of the service is exceeded, it is to proceed to step S103; for example, the current time is 11:30, then the current time has exceeded the last reminding.

In S103, it is to judge whether the service is still being sent or not;
for example, it is to judge whether there is mobile newspaper service sent to the user within 5 minutes or not, as long as there is one service, it is considered that the mobile newspaper is still being sent currently; if within five minutes, there is no mobile phone service sent, it is considered that the sending of the mobile newspapers have stopped.

If the mobile newspaper is still being sent, it is to proceed to the step S104; otherwise, it is to proceed to step S105.

In S104, it is to send a piece of SMS to the user, prompting that "the system is still in processing, please wait", and the current process ends.

In S 105, it is to send the last piece of reminding message to the user, prompting that "the service is not sent successfully due to the system, and the charge will be returned at the end of this month", and no reminding message will be sent to the user in that day any longer, the process ends.

When the last reminding time is exceeded and the sending of the service has stopped, it is to send the information such as "the service is not sent successfully due to the system, and the charge will be returned at the end of this month", and no more reminding information is sent afterwards. As long as either of the two conditions: "the last reminding time is exceeded" and "the sending of the service has stopped" is not met, the reminding information still needs to be sent at the next time interval.

The service reminding method of this embodiment can be used to effectively remind the user and enhance the customer satisfaction.

FIG. 4 is a flow chart of the method for registering a reminding schedule in accordance with an embodiment of the present invention, and the specific steps are described in detail as follows:
In S201, the user submits a request for registering the reminding schedule via the WEB;
In S202, after the service reminding system receives the request message, it extracts the user information (such as the phone number) and the service information in the reminding schedule information, and send them to the authentication server, such as the DSMP system;
In S203, the authentication server (such as DSMP system) authenticates;
The authentication mainly aims at the subscription relationship about whether the phone number subscribes the service or not, as well as whether the service is, for example, a monthly service or not. If the number subscribes the service and the service is a monthly service, the authentication is successful, it is to proceed to step S204, otherwise, the authentication fails, it is to proceed to step S205;
In S204, if the authentication is successful, it is to record the reminding schedule information into the database;
In S205, if the authentication fails, it is to discard the request for the reminding schedule.

The method for registering a reminding schedule in this embodiment can be used to check the validity of the user's subscription information to prevent the user from blindly making a reminding schedule.

The service reminding method, the service reminding system and the communication system of the present invention can achieve the SMS (for example, the PUSH SMS) reminding function, can effectively inform the user of the reasons about why the important service is not sent on time, thus improving the customer satisfaction, therefore the present invention is with great practicability.

The above description is only the specific implementation of the present invention, it should be noted that, for those skilled in the field, without departing from the principles of this invention, a number of improvements and modifications can also be made, and these improvements and modifications should be regarded as the scope of protection of the present invention.

### Industrial Applicability

Compared to the prior art, the service reminding method, the service reminding system and the communications system in the present invention can be used to effectively remind the user and enhance the customer satisfaction.

## Claims

1. A service reminding method, comprising:
detecting whether a service server sends a particular service to a user corresponding to the particular service within a first reminding time or not, if the service server does not send the particular service, sending reminding information to the user.

2. The method of claim 1, wherein, the step of sending the reminding information to the user might comprise:
judging whether a current time exceeds a second reminding time or not, if not, sending first reminding information to the user.

3. The method of claim 2, wherein, the step of sending the reminding information to the user might also comprise:
if it is determined that the current time exceeds the second reminding time, judging whether the sending of the particular service stops or not, if the sending of the particular service does not stop, sending the first reminding information to the user; if the sending of the particular service has stopped, sending second reminding information to said user.

4. The method of any one of claims 1-3, wherein, in the step of sending the reminding information to said user, the reminding information is sent by a following way:
sending the reminding information to the user corresponding to the particular service once every predetermined time interval.

5. A service reminding system, comprising: a schedule inputting module, a schedule processing module and a database module, wherein,
the schedule inputting module is set to input reminding schedule information into the database module, and the reminding schedule information comprises user information, service information and a first reminding time;
the schedule processing module is set to extract the reminding schedule information from the database module, detect whether a service server sends a particular service to a user corresponding to the particular service within the first reminding time or not, if not, sending reminding information to the user.

6. The service reminding system of claim 5, wherein,
the schedule inputting module is set to input the reminding schedule information into the database module after sending the user information and the service information to a authentication server and receiving authentication success message returned by the authentication server.

7. The service reminding system of claim 5, wherein, the reminding schedule information also comprises a second reminding time,
the schedule processing module is set to send the reminding information to said user by a following way: after detecting that the service server does not send the particular service to the user corresponding to the particular service, judging whether a current time exceeds the second reminding time or not, if not, sending first reminding information to the user.

8. The service reminding system of claim 7, wherein,
the schedule processing module is also set to send the reminding information to said user by a following way: if it is determined that the current time exceeds the second reminding time, judging whether the sending of the particular service stops or not, if the sending of the particular service does not stop, sending the first reminding information to the user; if the sending of the particular service has stopped, sending second reminding information to said user.

9. The service reminding system of any one of claims 5-8, wherein, the reminding schedule information also comprises a time interval,
the schedule processing module is set to send reminding information to said user once every time interval.

10. The service reminding system of claim 5, further comprising,
a log module, which is set to record the information that the service server does not send the particular service to the user corresponding to the particular service.

11. A communication system, comprising: a service server and a service reminding system described in any one of claims 5-10, wherein
the service reminding system is connected with the service server through an interface and is set to: detect whether the service server sends a particular service to a user corresponding to the particular service within a first reminding time or not, if the service server does not send the particular service, send reminding information to the user.

12. The communication system of claim 11, further comprising an authentication server, wherein
the service reminding system is also set to: receive reminding schedule information submitted by the user, send user information and service information in the received reminding schedule information to the authentication server, and when authentication success message returned by the authentication server is received, input the reminding schedule information into a database module in the service reminding system;
the authentication server is set to authenticate the received user information and service information, if the authentication is successful, send authentication success message to the service reminding system.

13. The communication system of claim 11, wherein,
the service reminding system is set to send the reminding information to said user by a following way: after detecting that the service server does not send the particular service to the user corresponding to the particular service, judging whether a current time exceeds a second reminding time or not, if not, sending first reminding information to the user.

14. The communication system of claim 13, wherein,
the service reminding system is also set to send the reminding information to the user by a following way: if it is determined that the current time exceeds the second reminding time, judging whether the sending of the particular service stops or not, if the sending of the particular service does not stop, sending the first reminding information to the user; if the sending of the particular service has stopped, sending second reminding information to said user.

15. The communication system of any one of claims 11-14, wherein,
the service reminding system is set to send the reminding information to said user once every predetermined time interval.

16. The communication system of any one of claims 11-14, further comprising a charge management system, wherein
the service reminding system is further set to record the information that the service server does not send the particular service to the user corresponding to the particular service, and then send information of the user to said charge management system;
the charge management system is set to calculate the user's charge based on received information of the user.

17. The communication system of any one of claims 11-14, wherein,
the service server is also set to send notification message to the service reminding system when the particular service is sent to the user corresponding to the particular service;
the service reminding system is also set to delete the user's reminding schedule information corresponding to the notification message after receiving the notification message.

18. A method for registering a service reminder, comprising:
after receiving reminding schedule information submitted by a user, extracting user information and particular service information from the reminding schedule information; and
authenticating the user information and the particular service information, if the authentication is successful, recording the reminding schedule information.
